# EUROPÄISCHE PATENTANMELDUNG

(11) **EP 1 557 896 A1**
(43) Veröffentlichungstag der Anmeldung: **27.07.2005**
(21) Anmeldenummer: 04106606.9
(22) Anmeldetag: 15.12.2004
(51) Int. Cl.: H01M 8/04

(54) **Energieumwandlungsvorrichtung und Verfahren zum Betreiben der Energieumwandlungsvorrichtung**

(30) Priorität: 16.01.2004 DE 102004002337
(71) Anmelder: Bayerische Motoren Werke Aktiengesellschaft, 80809 München (DE)
(72) Erfinder: Kammerer, Jürgen, 85276 Pfaffenhofen (DE); Lamp, Peter, Dr., 86916 Kaufering (DE)

(57) **Zusammenfassung**

Die Erfindung betrifft eine Energieumwandlungsvorrichtung mit einer Reformereinrichtung (5) und einer Brennstoffzelleneinrichtung (4), wobei der Reformer (5) mit einem Reformatgaseingang (20) der Brennstoffzelle (4) verbunden ist und ein Restreformatausgang (21) mit einer Restreformatleitung (25) verbunden ist, wobei die Restreformatleitung (25) sowohl mit einer Nachverbrennungseinrichtung (6) als auch über zumindest einen Rezirkuliergaswärmetauscher (32), (35) mit dem Reformer (5) verbunden ist.

## Beschreibung

Die Erfindung betrifft eine Energieumwandlungsvorrichtung nach dem Oberbegriff des Anspruchs 1 und ein Verfahren zum Betreiben der Energieumwandlungsvorrichtung nach dem Oberbegriff des Anspruchs 24, insbesondere zur Umwandlung von chemischer Energie in elektrische Energie und Wärmeenergie.

Aus dem Stand der Technik sind Hilfsenergieversorgungseinrichtungen (Auxiliary Power Units, APU) bekannt, die in Flugzeugen (Turbinen mit Generator), Nutzfahrzeugen und Schiffen (Dieselmotor mit Generator) oder in der Raumfahrt (Brennstoffzellen) bereits im Serieneinsatz sind. Merkmal einer Hilfsenergieversorgungseinrichtung ist, dass sie unabhängig von dem eigentlichen Antriebsaggregat des Fahrzeuges, das Bordnetz des Fahrzeuges mit Strom versorgen kann.

Bekannte Möglichkeiten sind zum einen der Antrieb eines Generators über ein motorunabhängiges Aggregat basierend auf interner Verbrennung (Diesel-, Ottomotor) oder externer Verbrennung (Stirling-Motor, Rankine-Prozess) und zum anderen der Einsatz einer Brennstoffzelle. Außerdem sind unterschiedliche Typen von Brennstoffzellen, z.B. Membranbrennstoffzellen, Schmelzkarbonat-Brennstoffzellen und Festelektrolytbrennstoffzellen bekannt, die im Prinzip für eine Hilfsenergievorsorgungseinrichtung eingesetzt werden können. Außerdem sind auch Reformer- und Gasreinigungseinrichtungen bekannt, die es erlauben, aus Benzin, Diesel, Methanol, Erdgas oder anderen höheren Kohlenwasserstoffen ein Synthesegas zu erzeugen, das in den Brennstoffzellen elektrochemisch in elektrische Energie umgewandelt werden kann.

Membranbrennstoffzellen (PEMFC) werden bei ca. 80 bis 100°C betrieben und können nur reinen Wasserstoff umsetzen. Daher ist neben dem eigentlichen Reformer zur Synthesegaserzeugung eine aufwendige Gasreinigung notwendig. Festelektrolytbrennstoffzellen (SOFC) arbeiten bei 700 bis 1000°C und sind aufgrund der höheren Betriebstemperatur und ihrer Funktionsweise in der Lage, unterschiedliche Synthesegase mit geringeren Reinheitsanforderungen umzusetzen. Dies erlaubt ein relativ einfaches Energieumwandlungssystem, z.B. bestehend aus einer Reformierung mittels partieller Oxidation (POx-Reformer) und einer Festelektrolytbrennstoffzelle. Nicht in der Brennstoffzelle zur Stromproduktion benutztes Reformat wird in einer Abgasreinigung verbrannt. Abwärme die im System bei der partiellen Oxidation im Reformer, der chemischen Reaktion im Brennstoffzellenstapel und bei der Nachverbrennung entsteht, wird, sofern sie nicht systemintern zur Vorwärmung von Edukten genutzt wird, durch das Abgas aus dem System entlassen.

Derartige Systeme sind bekannt, haben jedoch den Nachteil, dass der erreichbare Wirkungsgrad noch nicht optimal ist und ein relativ hoher Anteil der dem System zugeführten chemischen Energie in Form von Wärmeenergie mit dem Abgas abgegeben wird.

Aus der EP 0797367 D1 ist eine Brennstoffzellenanlage mit Wärmenutzung des Kathodengases und ein Verfahren zu ihrem Betrieb bekannt. Diese Druckschrift offenbart eine Kombination eines Brennstoffzellenelements, insbesondere eines Festoxidbrennstoffzellenelements, dessen kathodenseitiges Abgas über einen Wärmetauscher geleitet wird, um den kathodenseitigen Frischgas Wärme zuzuführen. Anschließend wird das Kathodenabgas teilweise über einen weiteren Wärmetauscher einer Hochdruckseite einer Gasturbine zugeführt, um einen Teil des im Kathodenabgas enthaltenen Energieinhalts in Bewegungsenergie umzusetzen. Diese Bewegungsenergie wird dann für Versorgungspumpen des Systems, z.B. zur Förderung von Luft- oder Kathodenabgas, verwendet. Weiterhin wird vorgeschlagen, die Bewegungsenergie eventuell zum Antrieb eines Generators zu nutzen.

Bei dieser Brennstoffzellenanlage ist von Nachteil, dass sie hinsichtlich ihres Bauraums wenig flexibel ausgebildet ist.

Aus der WO 02/087052 A2 ist ein integriertes Festelektrolytbrennstoffzellensystem mit einer Brennstoffzelle, einer Nachbrennkammer und einem Reformer bekannt, bei dem heißes Reformatgas mittels eines Dreiwegeventils wahlweise in die Brennstoffzelle oder die Nachbrennkammer geleitet werden kann. Da sich dieses Dreiwegeventil im Heißbereich hinter dem Reformer befindet, ist hierfür ein erhöhter Bauaufwand zur Gewährung der erforderlichen Hitzebeständigkeit notwendig.

Außerdem ist es bekannt, beispielsweise, das Anodenabgas, welches noch Reste an Reformat enthalten kann, dem Reformer erneut zuzuführen und es somit zu rezirkulieren. Für eine solche Rezirkulierung sind grundsätzlich folgende Maßnahmen bekannt. Der Anodenabgasstrom wird mittels eines Hochtemperaturgebläses dem Reformer zugeführt. Dies ist technisch schwer umsetzbar, da das Bereitstellen einer ausreichend langen Lebensdauer des Hochtemperatur-Gebläses sehr aufwendig ist. Weiterhin ist es bekannt, die Rezirkulierung im Heißbereich mittels eines Turboladers zu bewerkstelligen. Dies ist jedoch technisch sehr aufwendig und teuer. Weiterhin ist es bekannt, die Rezirkulierung mittels Gas-Strahlpumpen zu bewerkstelligen. Nachteilig ist zudem, dass hierbei eine geringe Möglichkeit zur Regelung der Medienströme, insbesondere bei dem Erfordernis des gesamten Abschaltens der Rezirkulierung besteht.

Aufgabe der Erfindung ist es, eine Energieumwandlungsvorrichtung mit Restreformatrezirkulierung anzugeben, welche einfach aufgebaut ist und hinsichtlich der erforderlichen Komponenten kostengünstig realisierbar ist. Insbesondere ist es wünschenswert, Hochtemperaturkomponenten zu vermeiden. Weiterhin ist es eine Aufgabe der Erfindung, sicherzustellen, dass die Brennstoffzelle mit einem Synthesegas von sehr hoher Qualität beaufschlagt werden kann.

Diese Aufgaben werden mit einer Energieumwandlungsvorrichtung mit den Merkmalen des Anspruchs 1 und einem Verfahren zum Betreiben der Energieumwandlungsvorrichtung mit den Merkmalen des Anspruchs 24 gelöst.

Erfindungsgemäß wurde erkannt, dass es in einfacher Art und Weise möglich ist, die gestellten Aufgaben zu erfüllen, indem z.B. vom Anodenausgang der Festelektrolytbrennstoffzelle eine Leitung zu z.B. einer der Nachverbrennungseinrichtung vorgesehen ist, in der das Anodenabgas geführt werden kann. Von dieser Leitung abzweigend ist erfindungemäß eine Leitung vorgesehen, welche in der Lage ist, zumindest einen Teilstrom des Anodenabgases zum Reformer zurückzuführen. In dieser Zweigleitung sitzt zumindest ein Wärmetauscher zur Kühlung des Anodenabgasteilstroms und eine Einrichtung zum Erhöhen des Anodenabgasdruckes, welche in Strömungsrichtung nach dem Wärmetauscher angeordnet ist.

Gemäß einer vorteilhaften Ausführungsform der Erfindung ist zwischen der Einrichtung zum Erhöhen des Gasdrucks und dem Reformer ein Rückschlagventil angeordnet, welches einen Gasfluss vom Reformer hin zum Wärmetauscher unterbindet.

Gemäß einer weiteren vorteilhaften Ausführungsform der Erfindung sitzt zwischen der Einrichtung zum Erhöhen des Abgasdruckes und dem Reformer ein weiterer Wärmetauscher. Diese Anordnung ermöglicht es, die Einrichtung zum Erhöhen des Abgasdruckes z.B. als Niedertemperaturgebläse auszugestalten und trotzdem bei Bedarf über die Zweigleitung einen Bypass für das Reformatgas, unter Umgehung der Brennstoffzelle direkt in die Nachbrennkammer zur Verfügung zu stellen.

Bei der Erfindung ist von besonderem Vorteil, dass in einfacher Art und Weise z.B. mittels eines Niedertemperaturgebläses, welches kostengünstig und mit hoher Lebensdauer realisierbar ist, eine Reformatrezirkulierung in einfacher Art und Weise geregelt und/oder gesteuert erreicht werden kann. Besonders vorteilhaft bei der Erfindung ist, dass durch Umkehrung der Förderrichtung des Gebläses bei Bedarf ein Reformatgasbypass für das Reformatgas, insbesondere im Kalt- oder Startanlauf unter Umgehung der Brennstoffzelle direkt in die Nachverbrennungseinrichtung zur Verfügung gestellt werden kann.

Im folgenden wird die Erfindung anhand der Zeichnung beispielhaft näher erläutert. Es zeigen:
- Figur 1:: eine erste Ausführungsform der erfindungsgemäßen Energieumwandlungsvorrichtung;
- Figur 2:: eine zweite Ausführungsform der erfindungsgemäßen Energieumwandlungsvorrichtung gemäß Figur 1 mit einer Bypassfunktion.

Gegenstand der Erfindung ist eine Energieumwandlungsvorrichtung und ein Verfahren zu dessen Betrieb, welche die Rezirkulierung in einem Brennstoffzellensystem auf Basis einer Festelektrolytbrennstoffzelle mittels Nieder-Temperatur-Komponenten (100-350°C) erlauben. Die Erfindung erlaubt die geregelte Einstellung einer solchen Funktion (Menge des rezirkulierten Reformats) und auch deren Abschaltung während anderer Modi beim Betrieb des Systems, wenn die Rezirkulierung nicht erwünscht ist (z.B. beim Kaltstart) oder die Abschaltung der Funktion bei für die Niedertemperatur-Komponenten zu hohen Temperaturen.

Hierzu ist ein Wärmeübertrager vorgesehen, der als kühlendes Medium die Prozessluft im Gesamtsystem (z.B. für die Kathodenseite des Festelektrolytbrennstoffzelle (SOFC)) nutzt, sowie eine Gebläsestufe zur Erhöhung des Druckniveaus des genutzten Reformats auf das Druckniveau des Reformers oder darüber, sowie ein Rückschlagventil, das verhindert, dass bei nichtaktiver Rezirkulierung Synthesegas oder Luft aus dem Reformer in die Nachverbrennung gelangt.

Außerdem ist Gegenstand dieser Erfindung, dass in einer anderen Ausführung des Systems der gleiche Pfad, der zur Rezirkulierung dient, in Betriebszuständen, in denen es zu Rußbildung in Teilen der Energieumwandlungsvorrichtung, insbesondere in der Hochtemperaturbrennstoffzelle kommen kann, umgekehrt durchfahren werden kann und somit ein Bypass zur SOFC zur Verfügung gestellt wird, um die Brennstoffzelle vor Verrußung zu schützen. In dieser Konfiguration muss das bei der Rezirkulierung aufgeführte Rückschlagventil entfallen. Unerwünschte Stromrichtungen müssen durch eine Rezirkulierpumpe oder ein Absperrventil unterbunden werden.

Während der Kaltstartphase fördert die Rezirkulierungspumpe Reformat aus der Reformerstufe in die Nachverbrennung. Eine weitere Möglichkeit besteht darin, dass das Reformat im Freilauf dem Reformatstrom in Richtung Nachverbrennung folgt, wobei die Druckerzeugung durch ein Prozessluftgebläse in einer Luftversorgung bewerkstelligt wird. Hierzu ist es erforderlich, dass das Reformat durch einen Wärmeübertrager vor der Rezirkulierungspumpe auf niedrige Temperaturen (100-350°C) gekühlt wird. Zur Kühlung des Reformats bietet sich hierbei die Prozessluft für das Brennstoffzellensystem an, z.B. die Prozessluft für den Reformer, die Brennstoffzelle oder die Nachverbrennung. Dies ist vorteilhaft, um die Rezirkulierungspumpe nicht zu beschädigen. Weiterhin kann ein Temperaturfühler vor der Rezirkulierungspumpe angeordnet sein, welcher bei einem Überschreiten eines Temperaturmaximalwertes veranlasst, dass ein Reformatstrom die Rezirkulierungspumpe umgehend auf die Festelektrolytbrennstoffzellen umgelenkt wird.

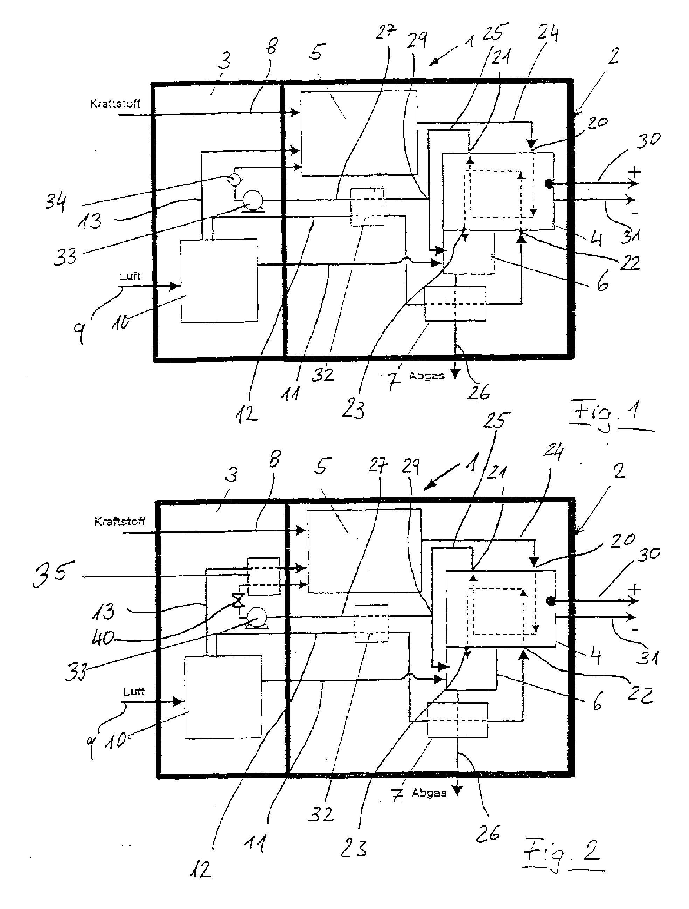

Eine erfindungsgemäße Energieumwandlungsvorrichtung 1 (Figur 1) weist eine Brennstoffzelleneinrichtung 2 und eine Versorgungseinrichtung 3 auf.

Die Brennstoffzelleneinrichtung 2 weist eine Brennstoffzelle 4, z.B. einen Brennstoffzellenstapel oder ein Brennstoffzellenbündel, insbesondere eine Festelektrolytbrennstoffzelle auf. Weiterhin weist die Brennstoffzelleneinrichtung 2 einen Reformer 5 auf, welcher der Brennstoffzelle 4 vorgeordnet ist. Der Brennstoffzelle 4 nachgeordnet weist die Brennstoffzelleneinrichtung 2 eine Nachverbrennungseinrichtung 6 auf. Der Nachverbrennungseinrichtung 6 nachgeordnet ist ein Abgaswärmetauscher 7 vorhanden.

Die Versorgungseinrichtung weist eine Kraftstoffzufuhrleitung 8 auf, welche mit dem Reformer 5 verbunden ist. Weiterhin ist eine Luftzufuhrleitung 9 vorhanden, die in eine Luftversorgungseinrichtung 10 mündet. Die Luftversorgungseinrichtung 10 ist beispielsweise ein steuer- und/oder regelbares Gebläse, welches den Reformer 5, die Brennstoffzelle 4 und die Nachverbrennungseinrichtung 6 mit Prozessluft versorgt. Zu diesem Zweck ist die Luftversorgungseinrichtung 10 über eine erste Prozessluftleitung 11 mit der Nachverbrennungseinrichtung 6, über eine zweite Prozessluftleitung 12 mit der Brennstoffzelle 4 und über eine dritte Prozessluftleitung 13 mit dem Eingang des Reformers 5 verbunden.

Die Brennstoffzelle 4 weist einen Reformatgaseingang 20, einen Reformatgasausgang 21 sowie einen Prozesslufteingang 22 und einen Prozessluftausgang 23 auf. Weiterhin weist die Brennstoffzelle 4 Elektroden 30, 31 auf, an denen die elektrische Energie, die durch die Brennstoffzelle 4 erzeugt wird, abgegriffen werden kann. Der Reformatgaseingang 20 ist über eine Reformatgasleitung 24 mit dem Ausgang des Reformers 5 verbunden. Der Prozesslufteingang 22 der Brennstoffzelle 4 ist mit der zweiten Prozessluftleitung 12 verbunden. Der Prozessluftausgang 23 steht mit der Nachverbrennungseinrichtung 6 in Verbindung. Der Reformatgasausgang 21 steht über eine Restreformatleitung 25 mit der Nachverbrennungseinrichtung 6 in Verbindung, so dass das Abgas, welches die Brennstoffzelle 4 am Reformatgasausgang 21 verlässt, in die Nachverbrennungseinrichtung 6 gelangen kann. Die Nachverbrennungseinrichtung 6 weist ausgangsseitig eine Abgasleitung 26 auf. In der Abgasleitung 26 ist der Abgaswärmetauscher 7 angeordnet, derart, dass die dem Abgas entzogene Wärme der in der zweiten Prozessluftleitung 12 strömenden Prozessluft für die Brennstoffzelle 4 zugeführt wird. Somit erreicht die Prozessluft den Prozesslufteingang 22 der Brennstoffzelle 4 vorerhitzt.

Von der Reformatleitung 25 zweigt eine Rücklaufleitung 27 ab, welche mit einem Rezirkuliergasanschluss 28 des Reformers 5 verbunden ist. Von der Abzweigung 29 der Rücklaufleitung 27 sind von der Restreformatleitung 25 aus ein Rezirkuliergaswärmetauscher 32, eine Rezirkulierpumpe 33 und ein Rückschlagventil 34 in dieser Aufeinanderfolge angeordnet.

Der Rezirkuliergaswärmetauscher 32 steht ebenso mit der zweiten Prozessluftleitung 12 in Verbindung, so dass ein Wärmeaustausch vom heißen Rezirkuliergas hin zur kühlen Prozessluft für den Prozesslufteingang 22 der Brennstoffzelle 4 erfolgt. Dies bewirkt, dass Rezirkuliergas nach dem Rezirkuliergaswärmetauscher 32 in etwa eine Temperatur von 100 bis 350°C aufweist. Somit kann die Rezirkulierpumpe 33 als sogenannte Niedertemperaturgaspumpe ausgebildet werden, was einen erheblichen Kostenvorteil darstellt und zudem den Konstruktions- und Testaufwand zur Erreichung einer hohen Lebensdauer stark minimiert. Die Rezirkulierpumpe 33 fördert das in der Rücklaufleitung 27 strömende Rezirkuliergas zum Reformer 5 und erhöht dessen Druck auf einen geeigneten Reformereingangsdruck. Das Rückschlagventil 34 ist derart zwischen dem Reformer 5 und der Rezirkulierpumpe 33 in der Rücklaufleitung 27 angeordnet, dass ein Heißgasstrom vom Reformer 5 hin zur Rezirkulierpumpe 33 unterbunden ist.

Durch geeignete Steuerung und/oder Regelung der Rezirkulierpumpe 33 kann der Teilstrom des Rezirkuliergases, welcher durch die Rücklaufleitung 27 in den Reformer 5 geleitet wird, einfach, kostengünstig und zuverlässig bestimmt werden. Da das Druckniveau des Rezirkuliergases in der Rücklaufleitung 27 niedriger ist als das erforderliche Druckniveau des Rezirkuliergases zum Eintritt in den Reformer 5, kann durch Abschalten der Rezirkulierpumpe 33 in einfacher Art und Weise die Rezirkulierung auch abgeschaltet werden. In diesem Fall strömt das gesamte Abgas, welches in der Restreformatleitung 28 die Brennstoffzelle 4 verlässt in die Nachverbrennungseinrichtung 6. Ein weiterer Vorteil dieser Anordnung ist, dass die Prozessluft, welche für die Brennstoffzelle 4 bestimmt ist, zweistufig durch den Rezirkuliergaswärmetauscher 32 und den Abgaswärmetauscher 7 vorerhitzt wird und somit die Brennstoffzelle 4 mit idealer Temperatur erreicht. In dieser Art und Weise kann somit durch die Steuerung und/oder Regelung der Rezirkulierpumpe 33 auch Einfluss genommen werden auf die Prozesslufteintrittstemperatur in die Brennstoffzelle 4, da durch die Menge des in der Rücklaufleitung 27 strömenden Rezirkuliergases die Vorwärmung der Prozessluft in der ersten Stufe und somit auch die Gesamterwärmung, also auch die Eingangstemperatur der Prozessluft an der Brennstoffzelle 4 beeinflusst werden kann. Dies stellt somit zumindest in ausgewählten Betriebszuständen eine Regelungsvereinfachung dar.

Gemäß einer weiteren Ausführungsform der erfindungsgemäßen Energieumwandlungsvorrichtung 1 (Figur 2) ist in der Rücklaufleitung 27 zwischen der Rezirkulierpumpe 33 und dem Reformer 5 an Stelle des Rückschlagventils 34 ein zweiter Rezirkuliergaswärmetauscher 35 angeordnet, so dass jeweils vor und hinter der Rezirkulierpumpe 33 ein Wärmetauscher angeordnet ist. Der zweite Rezirkuliergaswärmetauscher 35 steht mit der dritten Prozessluftleitung 13 in Verbindung, welche von der Luftversorgungseinrichtung 10 zum Reformer 5 führt. Mit dieser Anordnung ist es möglich, dass Frischreformatgas, welches im Reformer erzeugt wird, über die Rücklaufleitung 27 den zweiten Rezirkuliergaswärmetauscher 35 durchströmend in Richtung zur Abzweigung 29 fließt bzw. ggf. von der Rezirkulierpumpe 23 gefördert wird. Hierbei durchströmt das Frischreformatgas nach der Rezirkulierpumpe 33 den ersten Rezirkuliergaswärmetauscher 32. Aufgrund der Druckverhältnisse kann es in einfacher Art und Weise eingerichtet werden, dass der gesamte Frischreformatgasstrom, welcher in der Rücklaufleitung 27 hin zur Abzweigung 29 gefördert wird, über die Restreformatleitung 25 in die Nachverbrennungseinrichtung 6 geleitet wird. Somit kann in einfacher Art und Weise ein Frischreformatgasbypass über die Rücklaufleitung 27 zur Verfügung gestellt werden, um ein ggf. Rußpartikel enthaltendes Reformatgas beim Anlaufen der Energieumwandlungsvorrichtung 1 direkt in die Nachverbrennungseinrichtung 6, unter Umgehung der Brennstoffzelle 4 zu leiten. Die Umkehrung der Förderrichtung kann entweder durch geeignete Wahl des Prozessluftdruckes für den Reformer 5 oder beispielsweise durch Umkehrung der Förderrichtung der Rezirkulierpumpe 33 gewährleistet werden. Durch die beiden Rezirkuliergaswärmetauscher 32 und 35 ist unabhängig von der Strömungsrichtung in der Rücklaufleitung 27 jedenfalls sichergestellt, dass die Rezirkulierpumpe 33 nur mit Gas beaufschlagt wird, welches eine relativ niedrige Temperatur im Bereich zwischen 100 und 350°C aufweist, so dass die Rezirkulierpumpe - wie oben beschrieben - mit kostengünstigen Komponenten bestückt werden kann, da diese nur relativ niedrige Temperaturen aushalten muss. Besonders vorteilhaft bei der Ausführungsform gemäß Figur 2 ist, dass alleine durch Steuerung und/oder Regelung der Rezirkulierpumpe 33 es möglich ist, entweder einen Bypassbetrieb in der Warmlaufphase zur Schonung der Brennstoffzelle zur Verfügung zu stellen oder einen geregelten Rezirkuliergasrückstrom zum Reformer zu gewährleisten. Somit sind beide Funktionen in einfacher Art und Weise mittels nur eines Regelungsgliedes verwirklichbar.

Optional oder zusätzlich kann zwischen den beiden Rezirkuliergaswärmetauschern 32, 35 ein z.B. magnetisch oder motorisch betätigbares Absperrventil 40 angeordnet sein. Mit dieser Maßnahme kann die Absperrfunktion in der Rezirkulierpumpe 33 ersetzt werden, was je nach Pumpenbauart vorteilhaft sein kann.

Im folgenden wird das Verfahren zum Betreiben der Energieumwandlungsvorrichtung beschrieben. Das erfindungsgemäße Verfahren zeichnet sich insbesondere dadurch aus, dass ein Restreformatgas, welches eine Brennstoffzelle 4 in einer Restreformatgasleitung 25 verlässt zumindest teilweise einer Rücklaufleitung 27 zugeführt wird, die als Rezirkulierleitung zum Reformer 5 zurückführt. Der in der Rezirkulierleitung 25 geführte Teilgasstrom wird in einem Rezirkuliergaswärmetauscher 32 abgekühlt und einer Rezirkulierpumpe 33 zugeführt. Die Rezirkulierpumpe 33 fördert das Rezirkuliergas in der Rücklaufleitung 27 zum Reformer 5 zurück. Bei einer weiteren Ausführungsform des erfindungsgemäßen Verfahrens wird in der Rücklaufleitung 27 wahlweise Frischreformatgas vom Reformer 5 hin zur Nachverbrennungseinrichtung 6 oder Restreformatgas von der Brennstoffzelle 4 hin zum Reformer 5 gleitet bzw. gefördert. Wenn Frischreformatgas vom Reformer 5 hin zur Nachverbrennungseinrichtung 6 gefördert werden soll, ist es wesentlich, dass vor der Rezirkulierpumpe 33, welche beispielsweise in entgegengesetzter Richtung fördert, ein zweiter Reformatgaswärmetauscher 32 angeordnet ist, so dass sichergestellt ist, dass Frischreformatgas mit abgesenkter Temperatur der Rezirkulierpumpe 33 zugeführt wird. In diesem Fall kann die Rücklaufleitung 27 als Bypass-Leitung zur Umgehung der Brennstoffzelle 4 für Frischreformatgas dienen.

## Patentansprüche

1. Energieumwandlungsvorrichtung mit einer Reformereinrichtung (5) und einer Brennstoffzelleneinrichtung (4), wobei der Reformer (5) mit einem Reformatgaseingang (20) der Brennstoffzelle (4) verbunden ist und ein Ausgang (21) mit einer Restreformatleitung (25) verbunden ist, **dadurch gekennzeichnet, dass** die Restreformatleitung (25) sowohl mit einer Nachverbrennungseinrichtung (6) als auch über zumindest einen Rezirkuliergas-Wärmetauscher (32), (35) mit dem Reformer (5) verbunden ist.

2. Energieumwandlungsvorrichtung nach Anspruch 1, **dadurch gekennzeichnet, dass** zwischen dem Reformer (5) und dem Rezirkuliergas-Wärmetauscher (32) eine Einrichtung zum Erhöhen des Gasdrucks (33) angeordnet ist.

3. Energieumwandlungsvorrichtung nach Anspruch 1 und/oder 2, **dadurch gekennzeichnet, dass** zwischen der Einrichtung zum Erhöhen des Gasdrucks (33) und dem Reformer (5) ein Rückschlagventil (34) angeordnet ist, welches einen Gasfluss vom Reformer (5) zum Rezirkuliergas-Wärmetauscher (32) hin unterbindet.

4. Energieumwandlungsvorrichtung nach einem oder mehreren der vorangegangenen Ansprüche, **dadurch gekennzeichnet, dass** zwischen der Einrichtung zum Erhöhen des Gasdruckes (33) und dem Reformer (5) ein zweiter Rezirkuliergas-Wärmetauscher (35) angeordnet ist.

5. Energieumwandlungsvorrichtung nach einem oder mehreren der vorangegangenen Ansprüche, **dadurch gekennzeichnet, dass** zwischen dem zweiten Rezirkuliergas-Wärmetauscher (35) und dem ersten Rezirkuliergas-Wärmetauscher (32) ein schaltbares Absperrventil (40) angeordnet ist.

6. Energieumwandlungsvorrichtung nach einem oder mehreren der vorangegangenen Ansprüche, **dadurch gekennzeichnet, dass** die Einrichtung zum Erhöhen des Abgasdruckes (33) eine Rezirkuliergaspumpe ist, welche ggf. gesteuert und/oder geregelt betreibbar ist.

7. Energieumwandlungsvorrichtung nach einem oder mehreren der vorangegangenen Ansprüche, **dadurch gekennzeichnet, dass** von der Restreformatleitung (25) eine Rücklaufleitung (27) abzweigt, in der der zumindest ein Rezirkuliergas-Wärmetauscher (32, 35) angeordnet ist.

8. Energieumwandlungsvorrichtung nach einem oder mehreren der vorangegangenen Ansprüche, **dadurch gekennzeichnet, dass** der Rezirkuliergas-Wärmetauscher (32) mit einer Prozessluftleitung (12) in Verbindung steht, welche die Brennstoffzelle (4) mit Frischluft versorgt.

9. Energieumwandlungsvorrichtung nach einem oder mehreren der vorangegangenen Ansprüche, **dadurch gekennzeichnet, dass** der zweite Rezirkuliergas-Wärmetauscher (35) mit einer Prozessluftleitung (13) in Verbindung steht, welche den Reformer (5) mit Frischluft versorgt.

10. Energieumwandlungsvorrichtung nach einem oder mehreren der vorangegangenen Ansprüche, **dadurch gekennzeichnet, dass** zumindest einer der Rezirkuliergas-Wärmetauscher (32, 35) mit einer Prozessluftleitung (11) verbunden ist, welche Prozessluft für die Nachverbrennungseinrichtung (6) zur Verfügung stellt.

11. Energieumwandlungsvorrichtung nach einem oder mehreren der vorangegangenen Ansprüche, **dadurch gekennzeichnet, dass** ein Temperaturfühler in Strömungsrichtung vor der Rezirkuliergaspumpe (33) angeordnet ist und dieser die Temperatur des durch die Pumpe (33) strömenden Gases überwacht.

12. Energieumwandlungsvorrichtung nach einem oder mehreren der vorangegangenen Ansprüche, **dadurch gekennzeichnet, dass** der Nachverbrennungseinrichtung (6) nachgeordnet ein Abgaswärmetauscher (7) vorhanden ist, welcher mit der Prozessluftleitung (12) für die Brennstoffzelle (4) verbunden ist.

13. Energieumwandlungsvorrichtung nach einem oder mehreren der vorangegangenen Ansprüche, **dadurch gekennzeichnet, dass** eine Luftversorgungseinrichtung (10) vorhanden ist, welche über Prozessluftleitungen (11, 12, 13) mit der Nachverbrennungseinrichtung (6) der Brennstoffzelle (4) und dem Reformer (5) in Verbindung steht.

14. Energieumwandlungsvorrichtung nach einem oder mehreren der vorangegangenen Ansprüche, **dadurch gekennzeichnet, dass** die Luftversorgungseinrichtung (10) ein steuerund/oder regelbares Gebläse ist.

15. Energieumwandlungsvorrichtung nach einem oder mehreren der vorangegangenen Ansprüche, **dadurch gekennzeichnet, dass** die Brennstoffzelle (4) einen Reformatgaseingang (20), einen Reformatgasausgang (21) sowie einen Prozesslufteingang (22) und einen Prozessluftausgang (23) aufweist, wobei der Reformatgaseingang (20) über eine Reformatgasleitung (24) mit dem Ausgang des Reformers (5) verbunden ist.

16. Energieumwandlungsvorrichtung nach einem oder mehreren der vorangegangenen Ansprüche, **dadurch gekennzeichnet, dass** der Prozessluftausgang (23) mit der Nachverbrennungseinrichtung (6) in Verbindung steht.

17. Energieumwandlungsvorrichtung nach einem oder mehreren der vorangegangenen Ansprüche, **dadurch gekennzeichnet, dass** der Abgaswärmetauscher (7) derart angeordnet ist, dass ein Wärmeaustausch zwischen dem Abgas aus der Nachverbrennungseinrichtung (6) und der in der zweiten Prozessluftleitung (12) strömenden Prozessluft für die Brennstoffzelle (4) erfolgt.

18. Energieumwandlungsvorrichtung nach einem oder mehreren der vorangegangenen Ansprüche, **dadurch gekennzeichnet, dass** die Restreformatleitung (25) mit dem Restreformatausgang (21) der Brennstoffzelle (4) in Verbindung steht und von einer Abzweigung (29) der Restreformatleitung (25) die Rücklaufleitung (27) abzweigt.

19. Energieumwandlungsvorrichtung nach einem oder mehreren der vorangegangenen Ansprüche, **dadurch gekennzeichnet, dass** in der Rücklaufleitung (27) von der Abzweigung (29) aus gesehen der Rezirkuliergas-Wärmetauscher (32) die Rezirkulierungspumpe (33) und ein Rückschlagventil (34) in dieser Aufeinanderfolge angeordnet sind.

20. Energieumwandlungsvorrichtung nach einem oder mehreren der vorangegangenen Ansprüche, **dadurch gekennzeichnet, dass** die Rezirkuliergaspumpe (33) als Niedertemperaturgaspumpe ausgebildet ist, welche geeignet ist, Gas mit einer Temperatur von 100°C bis 350°C zu fördern.

21. Energieumwandlungsvorrichtung nach einem oder mehreren der vorangegangenen Ansprüche, **dadurch gekennzeichnet, dass** das Rückschlagventil derart zwischen dem Reformer (5) und der Rezirkulierpumpe (33) in der Rücklaufleitung (27) angeordnet ist, dass ein Heißgasstrom vom Reformer (5) hin zur Rezirkulierpumpe (33) unterbunden ist.

22. Energieumwandlungsvorrichtung nach einem oder mehreren der vorangegangenen Ansprüche, **dadurch gekennzeichnet, dass** in der Rücklaufleitung (27) zwischen der Rezirkulierpumpe (33) und dem Reformer (5) anstelle des Rückschlagventils (34) der zweite Rezirkuliergas-Wärmetauscher (35) angeordnet ist.

23. Energieumwandlungsvorrichtung nach einem oder mehreren der vorangegangenen Ansprüche, **dadurch gekennzeichnet, dass** der zweite Rezirkuliergas-Wärmetauscher (35) mit der dritten Prozessluftleitung (13) in Verbindung steht, welche Prozessluft von der Luftversorgungseinrichtung (10) zum Reformer (5) führt.

24. Verfahren zum Betreiben einer Energieumwandlungsvorrichtung, insbesondere einer Energieumwandlungsvorrichtung nach einem oder mehreren der Ansprüche 23, wobei von einem Reformer (5) einer Brennstoffzelle (4) Reformatgas zur Verfügung gestellt wird, **dadurch gekennzeichnet, dass** die Brennstoffzelle verlassend das Restreformatgas teilweise einer Nachverbrennungseinrichtung (6) und zumindest teilweise dem Reformer (5) zugeführt wird, wobei das dem Reformer (5) zugeführte Restreformatgas gekühlt wird.

25. Verfahren nach Anspruch 24, **dadurch gekennzeichnet, dass** der Teilstrom des Restreformatgases mittels einer Einrichtung zum Erhöhen des Druckes (33) zum Reformer (5) gefördert wird.

26. Verfahren nach Anspruch 24, **dadurch gekennzeichnet, dass** eine Gasströmung in einer Gegenrichtung mittels eines Rückschlagventils (34) unterbunden wird.

27. Verfahren nach Anspruch 24, **dadurch gekennzeichnet, dass** das dem Reformer (5) zugeführte Restreformatgas in einer Restreformatgasleitung (27), abzweigend von einer Abzweigung (29) einer Restreformatgasleitung (25) gefördert wird.

28. Verfahren nach Anspruch 24, **dadurch gekennzeichnet, dass** Frischreformatgas, welches vom Reformer (5) über die Restreformatgasleitung (27) hin zur Abzweigung (29) strömt, vor dem Erreichen der Rezirkulierpumpe (33) gekühlt wird.
